# EUROPEAN PATENT APPLICATION

(11) **EP 2 631 493 A1**
(43) Date of publication of application: **28.08.2013**
(21) Application number: 13156461.9
(22) Date of filing: 22.02.2013
(51) Int. Cl.: F15B 1/24, F16H 61/00, F16H 61/30

(54) **Hydraulic servo-control of a servo-controlled gearbox**

(30) Priority: 22.02.2012 IT BO20120084
(71) Applicant: Magneti Marelli S.p.A., Corbetta (MI) (IT)
(72) Inventor: Giorgini, Stefano, 40061 Minerbio (IT); Bersani, Andrea, 40017 San Giovanni In Persiceto (IT); Bovina, Luca, 40033 Casalecchio Di Reno (IT)
(74) Representative: Boggio, Luigi

(57) **Abstract**

A hydraulic servo-control (1) of a servo-controlled gearbox comprising a hydraulic accumulator (3) containing control fluid under pressure and comprising an outer housing (7) provided with an inner cylindrical surface having an overall diameter (W); and a piston (12) axially sliding and mobile inside the outer housing (7) and adapted to define a first variable-volume chamber (C1) for a gaseous material and a second variable-volume chamber (C2) for the control fluid under pressure; and limit stop means (21) arranged at an open end of the outer housing (7) which act as a striker element for the piston (12) and comprise a circlip (22) with a substantially annular shape, having an opening (23) and having a second overall diameter (Z) which substantially approximates by excess the first diameter (W) of the inner cylindrical surface (16) of the outer housing (7).

## Description

### FIELD OF THE INVENTION

The present invention relates to a hydraulic servo-control of a servo-controlled gearbox.

### PRIOR ART

Servo-controlled gearboxes have become increasingly widespread, which gearboxes are structurally similar to a traditional manual gearbox except in that the clutch pedal and the gear changing stick operated by the driver are replaced by corresponding electric or hydraulic servo-controls.

Using a servo-controlled manual gearbox, the driver only needs to send the order to shift to a higher gear or to a lower gear to a gearbox control unit, and the gearbox control unit autonomously changes gear acting on both the engine and the servo-controls associated with clutch and gearbox.

Generally, the gearbox servo-control is of the hydraulic type and acts on a gearbox control shaft for transmitting both an axial displacement (i.e. along a central axis) for selecting the gear range, and a rotation about the central axis for engaging and disengaging the single gears, to the control shaft itself. Accordingly, the gearbox servo-control comprises a linear hydraulic actuator mechanically coupled to the control shaft for axially displacing the control shaft, and a rotary hydraulic actuator mechanically coupled to the control shaft for rotating the control shaft.

The gearbox servo-control further comprises a storing tank containing the control fluid used by the hydraulic actuators (typically oil) at room pressure, a hydraulic accumulator containing control fluid under pressure, a motor pump which draws the control fluid from the storing tank and feeds the control fluid under pressure to the hydraulic accumulator, and a number of solenoid valves, which are adapted to selectively connect the chambers of the hydraulic actuators to the storing tank and to the hydraulic accumulator.

Hydraulic accumulators of the known type comprise an outer housing which is internally divided into a first variable-volume chamber adapted to accommodate the control fluid, and a second variable-volume chamber adapted to receive a gas under pressure (typically N₂).

The division between the first and second chambers is typically carried out by partition means arranged inside the outer housing, axially mobile inside the outer housing itself between an upper limit stop position and a lower limit stop position so as to vary the volumes of the first and second chambers, respectively, defined inside the outer housing. In particular, the partition means may comprise, for example, a bellows element made of a metal material, or a flexible partition membrane or even a piston.

In particular, hydraulic accumulators have become increasingly applied, which are provided with an outer housing shaped as a cup-shaped body, and with a piston arranged inside the outer housing, made axially sliding and mobile inside the outer housing itself.

While the above-described hydraulic accumulators are simple and inexpensive to be implemented, they have however the drawback that, if a traumatic and large damage occurs downstream of the hydraulic accumulator itself (e.g. a damage of about 10 mm in a piping, resulting in a considerable leakage of control fluid), a depression is generated such as to remove the partition means from the dedicated seat obtained into the outer housing and cause damage to the whole hydraulic servo-control.

### DESCRIPTION OF THE INVENTION

The object of the present invention is to provide a hydraulic servo-control of a servo-controlled gearbox, which hydraulic servo-control allows the drawbacks of the prior art to be overcome while being simple and cost-effective to be implemented.

A hydraulic servo-control of a servo-controlled gearbox is provided as claimed in the appended claims.

### BRIEF DESCRIPTION OF THE DRAWINGS

The present invention will now be described with reference to the accompanying drawings, which illustrate a non-limiting example thereof, in which:
- figure 1 shows a functional electric and hydraulic diagram of a hydraulic servo-control of a servo-controlled gearbox according to the present invention;
- figure 2 shows a side elevation perspective view of a hydraulic accumulator of the servo-control in figure 1;
- figure 3 shows a sectional view of a first embodiment of the hydraulic accumulator of the servo-control in figure 2;
- figures 4a and 4b show plan views of a detail of the hydraulic accumulator of the servo-control in figure 2;
- figure 5 shows a sectional view of a second embodiment of a hydraulic accumulator of the servo-control in figure 1; and
- figure 6 shows a plan view of a detail of the hydraulic accumulator of the servo-control in figure 5.

### PREFERRED EMBODIMENTS OF THE INVENTION

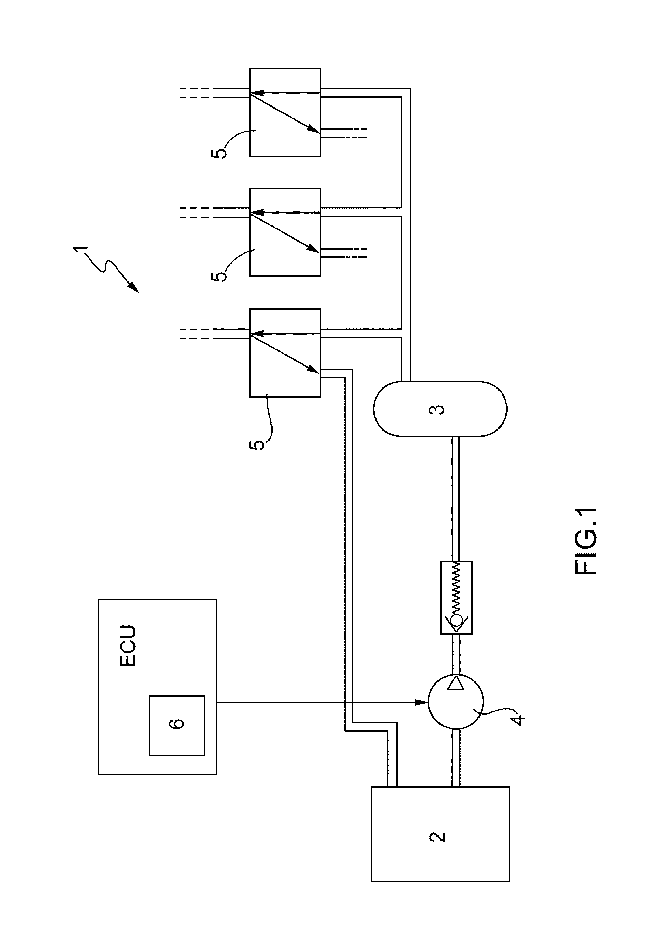

In figure 1, reference numeral 1 indicates as a whole a servo-control for a gearbox, which is provided with a control shaft (not shown). Servo-control 1 comprises a storing tank 2 containing the control fluid (typically oil) at room pressure used by a number of hydraulic actuators (not shown) coupled to said control shaft and suited to axially displace the control shaft and to rotate the control shaft about a central axis.

Servo-control 1 comprises an electronic control unit ECU, which is suited to feedback-pilot the hydraulic actuators and transmit a linear and/or rotary motion to the control shaft as a function of the signals related to the axial and angular position of the control shaft, which are transmitted by a number of sensors facing the control shaft itself.

Servo-control 1 comprises a hydraulic accumulator 3 containing control fluid under pressure and a motor pump 4 which draws the control fluid from the storing tank 2 and feeds the control fluid under pressure to the hydraulic accumulator 3.

Finally, servo-control 1 comprises a number of solenoid valves 5, which are adapted to selectively connect said hydraulic actuators to the storing tank 2 and to the hydraulic accumulator 3.

In particular, the hydraulic actuators are provided with a chamber (not shown) with which a respective three-way solenoid valve 5 is associated. Each three-way solenoid valve 5 is suited to selectively serve a number of functions. In particular, said solenoid valve 5 is made for keeping the respective chamber insulated in order to keep the control fluid present inside the chamber itself constant; it is made for connecting the chamber to the storing tank 2 for discharging the control fluid present inside the chamber; finally, it is made for connecting the chamber to the hydraulic accumulator 3 for feeding control fluid into the chamber.

In order to ensure a correct operation of the hydraulic actuators, i.e. to ensure that the hydraulic actuators provide their nominal performance, the pressure value of the control fluid inside the hydraulic accumulator 3 is required to always be between a minimum value and a maximum value. Accordingly, the electronic control unit ECU is suited to actuate the motor pump 4 when the pressure value of the control fluid inside the storing tank 2 is lower than the minimum value and to deactivate the motor pump 4 when the pressure value of the control fluid inside tank 2 is higher than the maximum value.

The electronic control unit ECU comprises an assessment device 6 which is adapted to assess the pressure value of the control fluid inside the hydraulic accumulator 3 without resorting to a direct measurement of the pressure value itself (i.e. without using a dedicated pressure sensor). In particular, the assessment device 6 assesses the pressure value of the control fluid inside the hydraulic accumulator 3 as a function of a number of operating parameters of the motor pump 4 and of the hydraulic actuators.

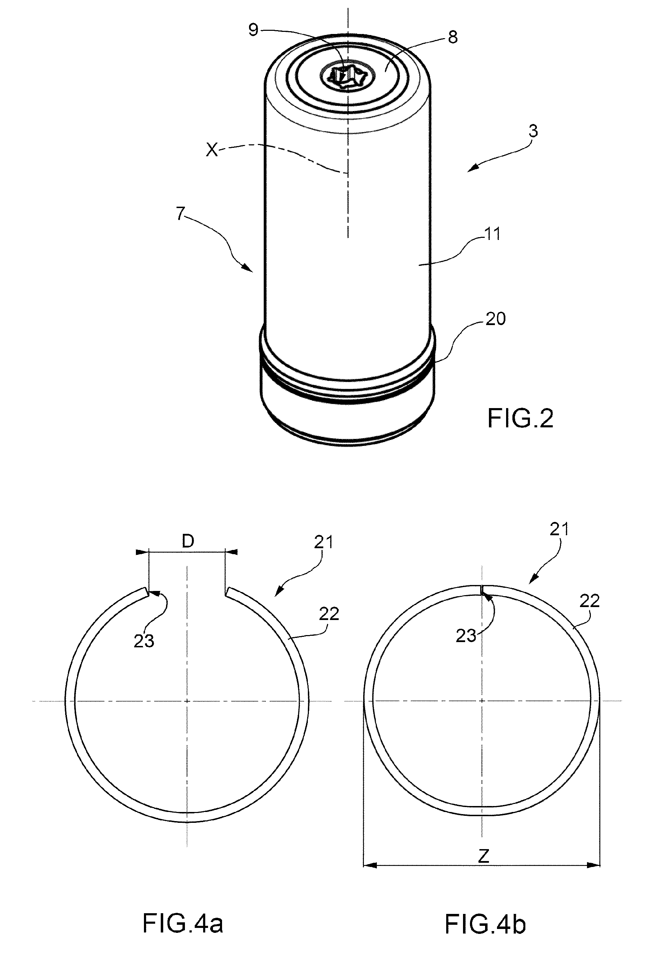

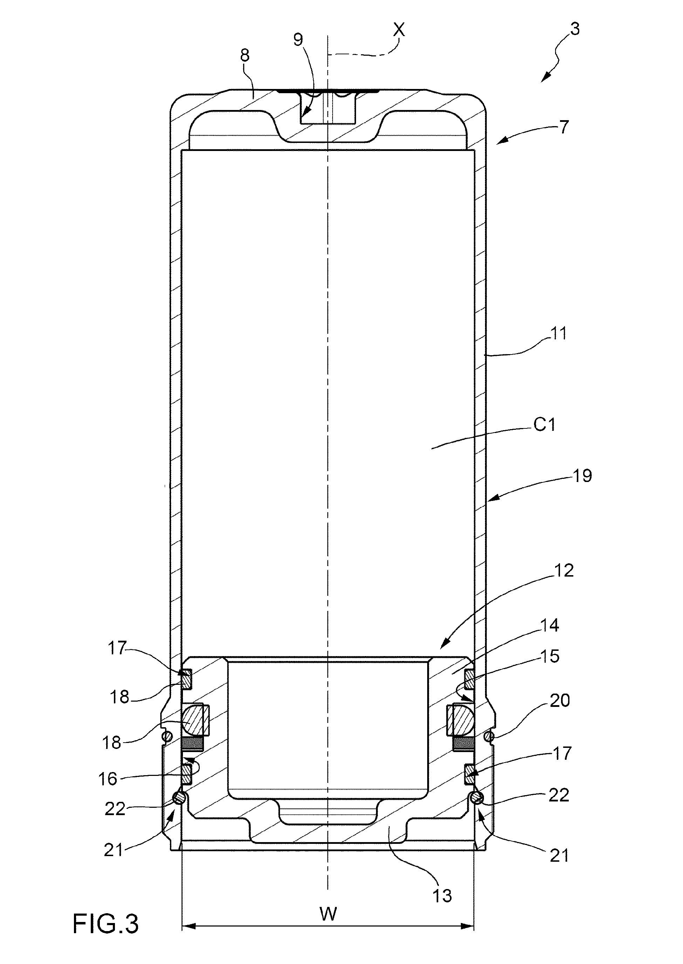

Figures 2 and 3 show a first embodiment of the hydraulic accumulator 3 in detail. The hydraulic accumulator 3 comprises an outer housing 7 made of a metal material having the shape of a cup-shaped body with cylindrical symmetry and provided with an axis X. The outer housing 7 comprises an upper wall 8 provided with a central recess 9. Moreover, the outer housing 7 comprises a lateral cylindrical wall 11 coaxial to axis X.

A piston 12 is arranged, in use, inside the outer housing 7, which piston is made of a metal material, is axially sliding along axis X and mobile inside the outer housing 7. Piston 12 defines a variable-volume chamber C1 inside the outer housing 7 which, in a preliminary step of assembling the hydraulic accumulator 3, is filled with a gaseous material (preferably N₂). Piston 12 further defines a variable-volume chamber C2 which is suited to be filled with the control fluid, where said two chambers C1 and C2 are separated by piston 12.

Piston 12 is defined by a cylindrical symmetry body, coaxial to axis X and comprising a base wall 13 and a lateral cylindrical wall 14. The lateral cylindrical wall 14 is provided with an outer cylindrical surface 15 coaxial to axis X, the diameter of which approximates by defect the diameter W of an inner cylindrical surface 16 coaxial to axis X of the outer housing 7.

A number of seats 17 are obtained on said outer surface 15 of the piston, which are adapted to accommodate a plurality of annular-shaped gasket elements 18, coaxial to axis X, made of a plastic material and suited to allow the sliding of piston 12 inside the outer housing 7 to be improved and the control fluid leaks to be prevented.

According to a preferred variant, a pilot cut is obtained on an outer cylindrical surface 19 of the outer housing 7 for accommodating a sealing ring 20, and is coaxial to axis X and made of a plastic material. The sealing ring 20 is arranged close to the open end of the outer housing 7.

As mentioned above, piston 12 is made axially sliding along axis X and mobile inside the outer housing 7 between an upper limit stop position determined by the upper wall 8 of the outer housing 7 and a lower limit stop position.

The lower limit stop position is defined by the presence of the limit stop means 21. The limit stop means 21 in turn comprise a circlip 22 (also known as C-clip) having a substantially annular shape, coaxial to axis X and preferably made of elastic steel. The circlip 22 is arranged in use inside a dedicated seat obtained in the inner cylindrical surface 16 of the outer housing 7. The circlip 22 projects towards the inside of the outer housing 7 so as to act as striker element for piston 12 which slides therein.

As better shown in figures 4a and 4b, it is worth noting that circlip 22 does not define a complete circumference but has an opening 23 which is made for optimizing the process of assembling the hydraulic accumulator 3.

According to a preferred embodiment, when circlip 22 is in an operating condition (i.e., when circlip 22 is inserted into the dedicated seat obtained in the inner cylindrical surface 16 of the outer housing 7), the opening 23 of circlip 22 has a size D smaller than 1 mm, and preferably ranging from 0.6 mm to 1 mm. The operating condition is shown in figure 4a.

In the condition shown in figure 4b, the ends of circlip 22, which define opening 23, are arranged in contact with each other. It has been seen that, in the condition in which the ends of circlip 22 which define opening 23 are arranged in contact with each other, it is essential that circlip 22 has an overall diameter Z which substantially approximates by excess the diameter W of the inner cylindrical surface 16 of the outer housing 7. In other words, when circlip 22 is arranged with the ends defining the opening 23 in contact with each other, the overall diameter Z is larger than the diameter W of the inner cylindrical surface 16 of the outer housing 7.

Such a condition is even more so verified when in use, i.e. when circlip 22 is inserted into the dedicated seat obtained in the inner cylindrical surface 16 of the outer housing 7.

In other words, even in the operating condition shown in figure 4a, circlip 22 has an overall diameter Z which substantially approximates by excess the diameter W of the inner cylindrical surface 16 of the outer housing 7. It is also true that even when circlip 22 is inserted into the dedicated seat obtained in the inner cylindrical surface 16 of the outer housing 7, the overall diameter Z is larger than the diameter W of the inner cylindrical surface 16 of the outer housing 7.

The step of assembling the hydraulic accumulator 3 takes place in an environment at a pressure of about 30 bar, in which chamber C1 is filled with a gaseous material (preferably N₂) and piston 12 is inserted into outer housing 7. Once piston 12 has been inserted, the circlip 22 is also fitted into its dedicated seat. Since the opening 23 of circlip 22, when in use (i.e., in the operating condition in which circlip 22 has been inserted into the dedicated seat obtained in the outer housing 7), has its ends at a short distance from each other, the two ends of circlip 22 itself must be diverted by slightly deforming it in order to allow the assembly operation.

In a totally similar manner, it has been seen that causing the overall diameter Z of circlip 22, in use, substantially approximate by excess the diameter W of the inner cylindrical surface 16 of the outer housing 7, it is not possible to remove circlip 22 from its seat obtained in the inner cylindrical surface 16 of the outer housing 7. Therefore, even in the unfortunate case of occurrence of a traumatic and large damage of the conduits located downstream of the hydraulic accumulator 3, and of a considerable depression, the travel of piston 12 is however stopped by the presence of circlip 22.

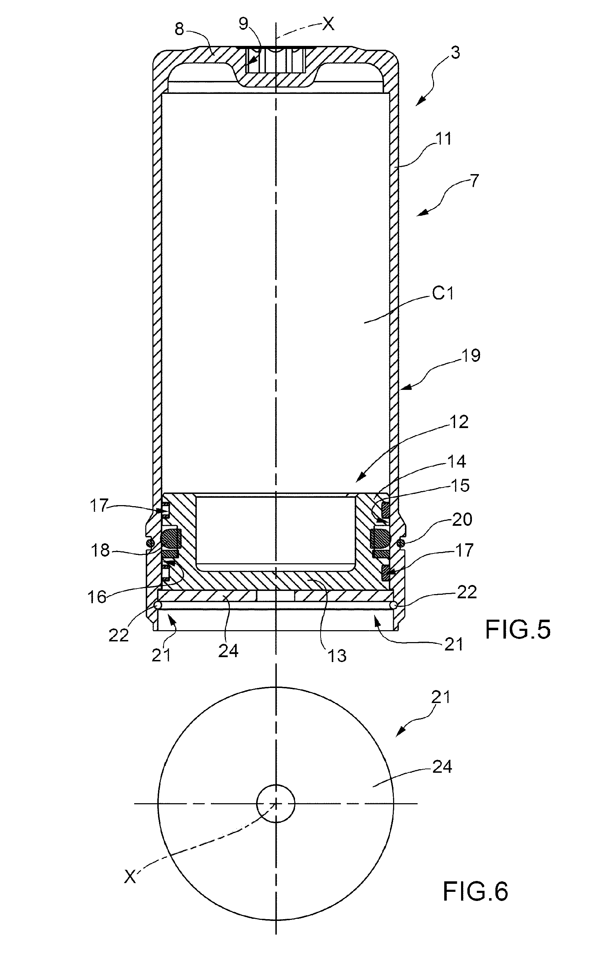

The hydraulic accumulator 3 shown in figure 3 is similar to that shown in figures 5 and 6 and the corresponding parts thereof are indicated, where possible, with the same reference numerals.

In particular, according to the embodiment shown in figure 5, the limit stop means 21 also comprise a perforated plate 24, which is interposed in use between the annular circlip 22 and piston 12. As better shown in figure 6, the perforated plate 24 has a discoid shape with a reduced thickness, is coaxial to axis X and has a diameter substantially approximating by defect the diameter W of the inner cylindrical surface 16 of the outer housing 7. Plate 24 has a number of through holes or openings which are such as to define a hydraulic narrowing for the control fluid in case of possible and undesired damage to the conduits downstream of the hydraulic accumulator 3. It is also worth noting that the perforated plate 24 is not provided with sealing elements and/or gaskets.

According to a preferred embodiment, the perforated plate 24 has a single through opening, coaxial to axis X, which has such a size as to define a hydraulic narrowing for the control fluid in case of possible and undesired damage to the conduits downstream of the hydraulic accumulator 3.

It is also worth noting that, according to this variant, the opening 23 of circlip 22 made for optimizing the process of assembling the hydraulic accumulator 3 may have a size smaller than or equal to 20 mm, preferably ranging from 14 mm to 20 mm.

Also in this case, the step of assembling the hydraulic accumulator 3 takes place in an environment at a pressure of about 30 bar, in which chamber C1 is filled with a gaseous material (preferably N₂) and piston 12 is inserted into the outer housing 7. Once piston 17 has been inserted, the perforated plate 24 and then the circlip 22 are also fitted into the dedicated seat thereof. According to this embodiment, since the opening 23 of circlip 22 has a size smaller than or equal to 20 mm, preferably ranging from 16 mm to 20 mm, diverting the circlip 22 itself (by slightly deforming it before its insertion into the seat) is not required.

According to a further variant (not shown), the limit stop means 21 comprise the perforated plate 24, which is interposed in use between circlip 22 and piston 12. It is worth noting that according to this variant, in order to further improve the reliability of hydraulic accumulator 3, the opening 23 of circlip 22 made for optimizing the process of assembling the hydraulic accumulator 3 when in use (i.e., once the circlip 22 has been inserted into the seat obtained within the outer housing 7) has a size smaller than or equal to 10 mm.

Also in this case, the step of assembling the hydraulic accumulator 3 takes place in an environment at a pressure of about 30 bar, in which the chamber is filled with a gaseous material (preferably N₂) and piston 12 is inserted into the outer housing 7. Once piston 12 has been inserted, the perforated plate 24 and then the circlip 22 are also fitted. According to this embodiment, since the opening 23 of circlip 22, when in use (i.e., once the circlip 22 has been inserted into the seat obtained in the outer housing 7), has a size smaller than or equal to 10 mm, the two ends of the circlip 22 itself need to be diverted by slightly deforming it in order to insert it into its respective seat.

Due to the presence of the perforated plate 24 and/or of the size of the opening 23 in circlip 22, if a traumatic and large damage occurs in the conduits downstream of the hydraulic accumulator 3 itself (e.g. a damage of about 10 mm in a piping that results in a considerable leakage of control fluid) and a considerable depression is thus generated, the travel of piston 12 is however stopped by the presence of the limit stop means 21.

It has been seen indeed that with an opening 23 in the circlip 22 which, when in use (i.e., once the circlip 22 has been inserted into the seat obtained in the outer housing 7), has a size smaller than or equal to 10 mm, and/or with the presence of the perforated plate 24, the limit stop means 21 cannot be removed from the respective seat.

Thereby, damage to the whole hydraulic servo-control 1 can be avoided, and the above-described servo-control 1 is simultaneously cost-effective, easy to be implemented and reliable.

## Claims

1. A hydraulic servo-control (1) of a servo-controlled gearbox comprising:
a number of hydraulic actuators provided with respective chambers;
a storing tank (2) containing control fluid used by the hydraulic actuators at room pressure;
a hydraulic accumulator (3) containing control fluid under pressure;
a motor pump (4), which draws the control fluid from the storing tank (2) and feeds the control fluid under pressure to the hydraulic accumulator (3); and
a number of solenoid valves (5), which are suited to selectively connect the chambers of the hydraulic actuators to the storing tank (2) and to the hydraulic accumulator (3) ;
the servo-control (1) is **characterized in that** the hydraulic accumulator (3) comprises an outer housing (7) provided with an inner cylindrical surface (16) having a first diameter (W); and a piston (12), which is arranged inside the outer housing (7), manufactured so as to be axially sliding and mobile inside the outer housing (7) itself, and suited to define, inside the outer housing (7), a first variable-volume chamber (C1) for a gaseous material and a second variable-volume chamber (C2) for the control fluid under pressure; and limit stop means (21), which are arranged at an open end of the outer housing (7), act as a striker element for the piston (12), and comprise a circlip (22) with a substantially annular shape, having an opening (23) and having a second overall diameter (Z) which substantially approximates by excess the first diameter (W) of the inner cylindrical surface (16) of the outer housing (7).

2. A servo-control according to claim 1, wherein in the condition in which the ends of the circlip (22) defining the opening (23) are arranged in contact with each other, the second overall diameter (Z) substantially approximates by excess the first diameter (W) of the inner cylindrical surface (16) of the outer housing (7).

3. A servo-control according to claim 1 or 2, wherein the opening (23) of the circlip (22) has a size that is smaller than or equal to 1 mm, and preferably ranging from 0.6 mm to 1 mm.

4. A servo-control according to any one of the preceding claims, wherein the circlip (22) is housed in a seat obtained in an inner surface (16) of the outer housing (7), so as to project towards the inside of the outer housing (7).

5. A servo-control according to any one of the preceding claims, wherein the limit stop means (21) which are arranged at an open end of the outer housing (7) and act as striker element for the piston (12), comprise a perforated plate (24) which is interposed in use between the circlip (22) and the piston (12).

6. A servo-control according to claim 5, wherein the perforated plate (24) has a discoid shape with a reduced thickness, has a diameter substantially approximating by defect the size of an inner surface (16) of the outer housing (7), and has a number of through holes, which are such as to define a hydraulic narrowing for the control fluid.

7. A servo-control according to claim 5 or 6, wherein the perforated plate (24) is not provided with sealing elements and/or gaskets.

8. A servo-control according to any one of the preceding claims, wherein the outer housing (7) has the shape of a cup-shaped body with cylindrical symmetry, is provided with an axis (X), and is provided with an upper wall (8) and with a lateral cylindrical wall (11), which is coaxial to the axis (X); and wherein the outer overall diameter of the piston (12) substantially approximates by defect the first diameter (W) of the inner cylindrical surface (16) of the outer housing (7).
